# EUROPÄISCHE PATENTSCHRIFT

(11) **EP 3 717 725 B1**
(45) Veröffentlichungstag und Bekanntmachung des Hinweises auf die Patenterteilung: **04.06.2025**
(21) Anmeldenummer: 18807930.5
(22) Anmeldetag: 20.11.2018
(51) Int. Cl.: E05F 15/622

(54) **SPINDELANTRIEBSBAUGRUPPE, FAHRZEUGKLAPPE MIT EINER SPINDELANTRIEBSBAUGRUPPE SOWIE VERFAHREN ZUR MONTAGE EINER SPINDELANTRIEBSBAUGRUPPE**
SPINDLE DRIVE ASSEMBLY, VEHICLE FLAP WITH A SPINDLE DRIVE ASSEMBLY AND METHOD FOR INSTALLING A SPINDLE DRIVE ASSEMBLY
MODULE D'ENTRAÎNEMENT À VIS, OUVRANT DE VÉHICULE DOTÉ D'UN MODULE D'ENTRAÎNEMENT À VIS ET PROCÉDÉ DE MONTAGE D'UN MODULE D'ENTRAÎNEMENT À VIS

(30) Priorität: 30.11.2017 DE 102017128392
(43) Veröffentlichungstag der Anmeldung: 07.10.2020
(73) Patentinhaber: Minebea AccessSolutions Deutschland GmbH, 85253 Erdweg (DE)
(72) Erfinder: KUMMER, Frank, 85253 Erdweg (DE); BITTNER, Eric, 85253 Erdweg (DE); LEJEUNE, Nicolas, 85253 Erdweg (DE)
(74) Vertreter: Prinz & Partner mbB
(86) Internationale Anmeldenummer: PCT/EP2018/081964
(87) Internationale Veröffentlichungsnummer: WO 2019/105808

(56) Entgegenhaltungen:
- EP-A1- 2 543 808
- DE-A1- 102006 053 730
- DE-A1- 102015 009 717
- DE-A1- 102015 204 074
- DE-A1- 102016 122 571
- DE-B4- 102006 053 730

## Beschreibung

Die Erfindung betrifft eine Spindelantriebsbaugruppe zum Öffnen und/oder Schließen einer Fahrzeugklappe.

Ferner betrifft die Erfindung eine Fahrzeugklappe, insbesondere eine Fahrzeugheckklappe oder einen Fahrzeugkofferraumdeckel, mit einer solchen Spindelantriebsbaugruppe.

Zusätzlich betrifft die Erfindung ein Verfahren zur Montage einer Spindelantriebsbaugruppe der vorgenannten Art.

Fahrzeugklappen sowie Spindelantriebsbaugruppen der eingangs genannten Art sind aus dem Stand der Technik bekannt.

Die bekannten Spindelantriebsbaugruppen umfassen in der Regel einen elektrischen Spindelantrieb, mittels dem die zugeordnete Fahrzeugklappe geöffnet und/oder geschlossen werden kann. Ein Nutzer eines zugehörigen Fahrzeugs muss also das Öffnen und Schließen nicht mehr manuell vornehmen. Er muss lediglich einen Befehl zum Öffnen oder Schließen an die Spindelantriebsbaugruppe absenden, was er beispielsweise über eine Funkfernbedienung oder über einen im Fahrzeug angeordneten Schalter tun kann. Auch kann ein fahrzeugaußenseitig angeordneter Fußschalter verwendet werden, der berührungslos arbeiten kann.

Um insbesondere die elektrischen Komponenten der Spindelantriebsbaugruppe vor Umgebungseinflüssen, beispielsweise Feuchtigkeit und Staub, zu schützen, sind die Spindelantriebsbaugruppen in der Regel eingehaust, wenn sie an einer Fahrzeugklappe montiert sind. DE 10 2016 12 25 71 A1 offenbart ein Beispiel einer Spindelantriebsbaugruppe.

Im Bereich der Herstellung von Spindelantriebsbaugruppen wird angestrebt, die Montage der Spindelantriebsbaugruppe möglichst einfach und kostengünstig zu halten. Allerdings entsteht hier ein Zielkonflikt mit der zuverlässigen Einhausung, sodass eine einfach und kostengünstig montierbare Spindelantriebsbaugruppe in der Regel nur einen mäßigen Schutz vor Umgebungseinflüssen bietet.

Die Aufgabe der Erfindung ist es, diesen Zielkonflikt zu überwinden und eine Spindelantriebsbaugruppe anzugeben, die sowohl einfach und kostengünstig zu montieren ist, als auch einen besonders wirkungsvollen Schutz der Spindelantriebsbaugruppenkomponenten vor Umgebungseinflüssen aufweist.

Die Aufgabe wird durch eine Spindelantriebsbaugruppe der eingangs genannten Art gelöst, bei der sich ein Spindelantriebsbaugruppengehäuse entlang einer Spindelantriebsachse erstreckt und das Spindelantriebsbaugruppengehäuse zwischen seinen axialen Enden einen axial beidseitig wirkenden Anschlagsabschnitt umfasst, wobei auf einer ersten axialen Seite des Anschlagsabschnitts eine Motorgetriebeeinheit angeordnet ist und wobei auf einer zweiten, der ersten axialen Seite entgegengesetzten axialen Seite des Anschlagsabschnitts eine Spindeleinheit angeordnet ist. Die Motorgetriebeeinheit umfasst dabei einen elektrischen Spindelantriebsmotor sowie ein mit diesem gekoppeltes Getriebe. Zusätzlich kann sie optional auch eine Bremse, einen oder mehrere Sensoren und/oder eine Überlastsicherung umfassen. Die Spindeleinheit umfasst zumindest eine Spindel und eine mit dieser gekoppelte Spindelmutter. Der Anschlagsabschnitt sorgt für eine definierte Position der Motorgetriebeeinheit und der Spindeleinheit innerhalb des Spindelantriebsbaugruppengehäuses. Das gilt sowohl im Betrieb als auch während der Montage. Das Spindelantriebsbaugruppengehäuse ist rohrförmig mit einem im Wesentlichen kreisrundem Querschnitt und derjenige Teil, in dem die Motorgetriebeeinheit und die Spindeleinheit sitzen, ist einstückig hergestellt, sodass sich ein besonders guter Schutz dieser Komponenten vor Umwelteinflüssen ergibt. Dies resultiert aus der Abwesenheit von Kontaktflächen oder -linien zwischen unterschiedlichen Komponenten des Spindelantriebsbaugruppengehäuses in diesem Bereich. Solche Kontaktflächen oder -linien stellen Schwachstellen gegenüber unerwünschten Umwelteinflüssen dar. Zudem ist eine solche Spindelantriebsbaugruppe besonders einfach aufgebaut und dadurch einfach und kostengünstig montierbar.

Das Spindelantriebsbaugruppengehäuse umfasst eine Gehäusekappe, die motorgetriebeeinheitsseitig das Spindelantriebsbaugruppengehäuse abschließt und innerhalb des Spindelantriebsbaugruppengehäuses laserverschweißt ist. Über eine solche Gehäusekappe ist ein besonders einfacher Abschluss des Spindelantriebsbaugruppengehäuses gegeben. Zudem verschließt die Gehäusekappe das Spindelantriebsbaugruppengehäuse zuverlässig und gewährleistet somit einen wirkungsvollen Schutz der im Spindelantriebsbaugruppengehäuse enthaltenen Komponenten vor unerwünschten Umwelteinflüssen. Das ist insbesondere der Fall, wenn die Gehäusekappe laserverschweißt ist. Eine zugehörige Laserschweißnaht stellt eine wasser- und staubdichte Verbindung dar. Bevorzugt läuft die Laserschweißnaht dabei vollständig um einen Umfang der Gehäusekappe um, sodass die Gehäusekappe den Abschluss des Spindelantriebsbaugruppengehäuses zuverlässig abdichtet. Weiter bevorzugt läuft die Laserschweißnaht um mindestens 361° um. Damit ist eine ganz besonders zuverlässige Sicherung gegen unerwünschte Umwelteinflüsse gegeben. Das Spindelantriebsbaugruppengehäuse ist damit wasserdicht.

Bevorzugt ist an der Gehäusekappe eine mechanische Schnittstelle zu einer Fahrzeugkarosserie angeordnet, die beispielsweise Kugelpfannen oder Anschlagmittel umfasst. Auch kann an der Gehäusekappe eine elektrische Schnittstelle vorgesehen sein, die beispielsweise eine Kabeldurchführung umfasst.

Die ist bezüglich der Spindelantriebsachse rotationsfest im Spindelantriebsbaugruppengehäuse gelagert, insbesondere ist die Motorgetriebeeinheit über ein Dämpfungselement oder über mehrere Dämpfungselemente im Spindelantriebsbaugruppengehäuse gelagert ist. Die Motorgetriebeeinheit ist über einen Formschluss im Spindelantriebsbaugruppengehäuse gelagert. Dadurch wird die rotationsfeste Lagerung durch ein einfaches Einschieben der Motorgetriebeeinheit in das Spindelantriebsbaugruppengehäuse erreicht. Die Montage ist also besonders einfach. Die rotationsfeste Lagerung der Motorgetriebeeinheit dient dabei der Drehmomentabstützung.

Es kann an beiden axialen Enden der Motorgetriebeeinheit jeweils ein Dämpfungselement, z. B. aus einem Elastomer, vorgesehen sein, wobei der vorgenannte Formschluss über das Dämpfungselement realisiert ist. Entsprechend wird das Antriebsdrehmoment der Motorgetriebeeinheit axial vorne und axial hinten abgestützt.

Die Spindeleinheit kann ein im Spindelantriebsbaugruppengehäuse befestigtes Führungsrohr umfassen, insbesondere wobei das Führungsrohr und das Spindelantriebsbaugruppengehäuse laserverschweißt sind. Durch das Führungsrohr ist eine genaue und zuverlässige Führung der Spindelmutter gewährleistet. Es kann als Gleitlagerbuchse ausgebildet sein. Die Befestigung des Führungsrohrs am Spindelantriebsbaugruppengehäuse ist bevorzugt wasserdicht ausgeführt, sodass an dieser Stelle keine Möglichkeit für unerwünschte Umwelteinwirkungen auf die Komponenten der Spindelantriebsbaugruppe gegeben ist. Das ist insbesondere der Fall, wenn das Führungsrohr und das Spindelantriebsbaugruppengehäuse laserverschweißt sind. Eine zugehörige Laserschweißnaht läuft bevorzugt vollständig und weiter bevorzugt um mindestens 361° um und bewirkt so eine besonders zuverlässige Abdichtung des Spindelantriebsbaugruppengehäuses gegen unerwünschte Umwelteinflüsse. Insbesondere ist das Spindelantriebsbaugruppengehäuse wasserdicht.

Bevorzugt ist das Führungsrohr aus Kunststoff hergestellt.

Vorteilhafterweise ist der Anschlagsabschnitt einstückig mit dem Spindelantriebsbaugruppengehäuse hergestellt. Das Spindelantriebsbaugruppengehäuse ist somit besonders aufwandsarm und kostengünstig herstellbar.

Das Spindelantriebsbaugruppengehäuse kann beispielsweise durch Spritzgießen hergestellt sein.

Vorzugsweise ist das Spindelantriebsbaugruppengehäuse aus Kunststoff hergestellt. Dieses Material ist wasser- und staubdicht. Somit eignet es sich besonders gut zum Schutz der Komponenten der Spindelantriebsbaugruppe vor Umwelteinflüssen. Ferner lässt sich Kunststoff mit standardmäßigen Maschinen einfach und kostengünstig verarbeiten, sodass auch die Spindelantriebsbaugruppe einfach und kostengünstig hergestellt werden kann.

Ferner wird die Aufgabe durch eine Fahrzeugklappe der eingangs genannten Art, insbesondere eine Fahrzeugheckklappe oder einen Fahrzeugkofferraumdeckel, mit einer erfindungsgemäßen Spindelantriebsbaugruppe gelöst. Nachdem die Spindelantriebsbaugruppe einfach und kostengünstig aufgebaut ist, ist folglich auch eine mit dieser ausgestattete Fahrzeugklappe vergleichsweise einfach und kostengünstig aufgebaut. Darüber hinaus ist eine solche Fahrzeugklappe besonders zuverlässig im Betrieb, da die Spindelantriebsbaugruppe besonders gut gegen unerwünschte Umwelteinflüsse geschützt ist.

Neben den vorgenannten Fahrzeugklappen können auch Gepäck- oder Ladeklappen von Freizeit- oder Nutzfahrzeugen mit einer erfindungsgemäßen Spindelantriebsbaugruppe ausgestattet sein. Gleiches gilt für Motorhauben und Fahrzeugfrontklappen.

Zusätzlich wir die Aufgabe durch ein Verfahren der eingangs genannten Art gelöst, das die folgenden Schritte umfasst:
a) Bereitstellen eines sich entlang einer Spindelantriebsachse erstreckenden Spindelantriebsbaugruppengehäuses,
b) Einsetzen einer Motorgetriebeeinheit in das Spindelantriebsbaugruppengehäuse ausgehend von einer ersten axialen Seite des Spindelantriebsbaugruppengehäuses und
c) Einsetzen einer Spindeleinheit in das Spindelantriebsbaugruppengehäuse ausgehend von einer zweiten, der ersten entgegengesetzten axialen Seite des Spindelantriebsbaugruppengehäuses.

Die Motorgetriebeeinheit und die Spindeleinheit werden also von entgegengesetzten Seiten in das Spindelantriebsbaugruppengehäuse eingesetzt. Das Spindelantriebsbaugruppengehäuse ist also für die Montage besonders gut zugänglich. Ferner können so die Motorgetriebeeinheit und die Spindeleinheit zeitgleich oder zeitlich überlappend in das Spindelantriebsbaugruppengehäuse eingesetzt werden. Dadurch kann die Montage zeitlich besonders schnell erfolgen. Insgesamt wird also eine einfache und kostengünstige Montage erreicht.

Es ist am Spindelantriebsbaugruppengehäuse ein axial beidseitig wirkender Anschlagsabschnitt vorgesehen und die Motorgetriebeeinheit ist an eine erste axiale Seite des Anschlagsabschnitts angelegt. Damit ist die Motorgetriebeeinheit einfach und zuverlässig im Spindelantriebsbaugruppengehäuse positioniert. Ein anschließendes Ausrichten oder Justieren ist nicht notwendig.

Die Motorgetriebeeinheit wird formschlüssig und rotationsfest im Spindelantriebsbaugruppengehäuse gelagert. Die formschlüssige Lagerung kann dabei eines oder mehrere Dämpfungselemente umfassen. Dann werden zunächst die Dämpfungselemente auf der Motorgetriebeeinheit angebracht und dann der Verbund aus Motorgetriebeeinheit und Dämpfungselementen im Spindelantriebsbaugruppengehäuse gelagert. Durch die formschlüssige Lagerung können nachfolgende Befestigungsschritte, insbesondere solche, die der Abstützung eines Antriebsdrehmoments der Motorgetriebeeinheit dienen, entfallen.

Bevorzugt wird ein erstes Dämpfungselement an einem axial vorderen Ende der Motorgetriebeeinheit angebracht und ein zweites Dämpfungselement an einem axial hinteren Ende.

Die Dämpfungselemente sind beispielsweise aus einem Elastomer hergestellt.

Am Spindelantriebsbaugruppengehäuse ist ein axial beidseitig wirkender Anschlagsabschnitt vorgesehen und es wird die Spindeleinheit an eine zweite, der ersten axialen Seite entgegengesetzte axiale Seite des Anschlagsabschnitts angelegt. Damit ist die Spindeleinheit einfach und zuverlässig im Spindelantriebsbaugruppengehäuse positioniert. Ein anschließendes Ausrichten oder Justieren ist auch hier nicht notwendig.

Bevorzugt wird die Spindeleinheit am Spindelantriebsbaugruppengehäuse befestigt, insbesondere wobei die Spindeleinheit mit dem Spindelantriebsbaugruppengehäuse laserverschweißt wird. Es wird so die Spindeleinheit zuverlässig an ihrer vorgesehenen Position gehalten. Zudem wird durch die Laserschweißnaht eine Abdichtung hinsichtlich unerwünschter Umwelteinflüsse hergestellt, die insbesondere wasserdicht ist. Bevorzugt läuft die Laserschweißnaht vollständig um. Weiter bevorzugt läuft sie um mindestens 361° um.

Es kann auch ein von der Spindeleinheit umfasstes Führungsrohr am Spindelantriebsbaugruppengehäuse befestigt werden, insbesondere wobei das Führungsrohr mit dem Spindelantriebsbaugruppengehäuse laserverschweißt wird.

Eine Gehäusekappe wird motorgetriebeeinheitsseitig auf das Spindelantriebsbaugruppengehäuse aufgesetzt, sodass die Gehäusekappe das Spindelantriebsbaugruppengehäuse abschließt.

Dabei ist die Gehäusekappe innerhalb des Spindelantriebsbaugruppengehäuses aserverschweißt.

Die Erfindung wird nachstehend anhand eines Ausführungsbeispiels erläutert, das in den beigefügten Zeichnungen gezeigt ist. Es zeigen:
- Figur 1 schematisch eine erfindungsgemäße Fahrzeugklappe mit einer erfindungsgemäßen Spindelantriebsbaugruppe, die mittels eines erfindungsgemäßen Verfahrens montiert ist,
- Figur 2 die Spindelantriebsbaugruppe aus Figur 1 in einer schematischen Schnittansicht,
- Figur 3 die Spindelantriebsbaugruppe aus Figur 1 in einer Explosionsdarstellung,
- Figur 4 die Spindelantriebsbaugruppe aus Figur 1 in einer geschnittenen Detailansicht,
- Figur 5 einen Spindelantriebsmotor der Spindelantriebsbaugruppe aus Figur 1 in einer perspektivischen Ansicht,
- Figur 6 schematisch das Zusammenwirken des Spindelantriebsmotors aus Figur 5 mit einem Spindelantriebsbaugruppengehäuse in einer teilweise geschnittenen Darstellung,
- Figur 7 schematisch eine endseitige Ansicht des Spindelantriebsmotors aus den Figuren 5 und 6 sowie einer mit dem Spindelantriebsmotor verbindbaren Gehäusekappe,
- Figur 8 eine Explosionsdarstellung eines zweistufigen Umlaufrädergetriebes der Spindelantriebsbaugruppe aus Figur 1, das mittels eines erfindungsgemäßen Verfahrens montierbar ist,
- Figur 9 eine weitere Explosionsdarstellung des zweistufigen Umlaufrädergetriebes der Spindelantriebsbaugruppe aus Figur 1, wobei das Umlaufrädergetriebe teilweise mittels eines erfindungsgemäßen Verfahrens montiert ist,
- Figur 10 eine ein zweistufiges Umlaufrädergetriebe, eine Kupplung, eine Hysteresebremse und einen Spindelantriebsmotor umfassende Explosionsdarstellung der Spindelantriebsbaugruppe aus Figur 1,
- Figur 11 eine Spindeleinheit der Spindelantriebsbaugruppe aus Figur 1 in einer Explosionsdarstellung,
- Figur 12 ein Detail der Spindeleinheit aus Figur 11,
- Figur 13 ein Detail der Spindelantriebsbaugruppe aus Figur 1 in einer Schnittdarstellung und
- Figur 14 ein weiteres Detail der Spindelantriebsbaugruppe aus Figur 1 in einer Schnittdarstellung.

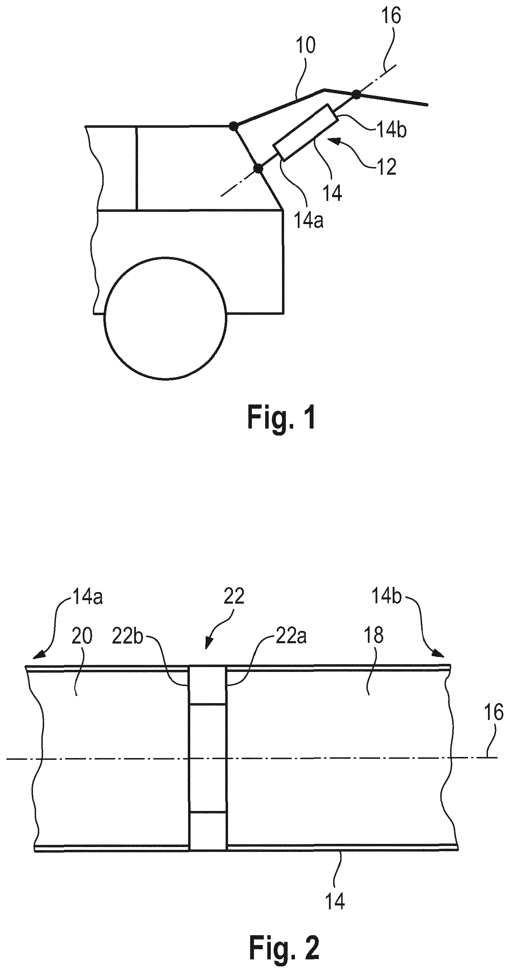

Figur 1 zeigt eine Fahrzeugklappe 10, die vorliegend eine Fahrzeugheckklappe ist, mit einer Spindelantriebsbaugruppe 12, mittels der die Fahrzeugklappe 10 geöffnet und/oder geschlossen werden kann.

Die Spindelantriebsbaugruppe 12 umfasst ein Spindelantriebsbaugruppengehäuse 14, das sich entlang einer Spindelantriebsachse 16 erstreckt.

Wie insbesondere anhand von Figur 2 zu sehen ist, sind im Spindelantriebsbaugruppengehäuse 14 eine in Figur 2 lediglich schematisch dargestellte Motorgetriebeeinheit 18 sowie eine ebenfalls in Figur 2 nur schematisch dargestellte Spindeleinheit 20 angeordnet.

Dabei umfasst das Spindelantriebsbaugruppengehäuse 14 zwischen seinen axialen Enden 14a, 14b einen axial beidseitig wirkenden Anschlagsabschnitt 22.

Die Motorgetriebeeinheit 18 ist auf einer ersten axialen Seite 22a des Anschlagsabschnitts 22 angeordnet und die Spindeleinheit 20 auf einer zweiten, der ersten axialen Seite 22a entgegengesetzten axialen Seite 22b.

Sowohl die Motorgetriebeeinheit 18 als auch die Spindeleinheit 20 liegen am Anschlagsabschnitt 22 an.

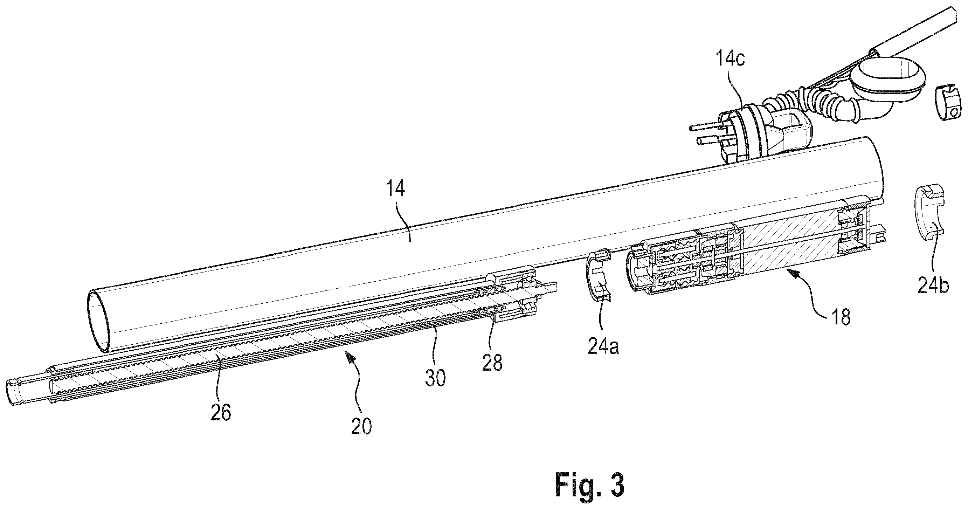

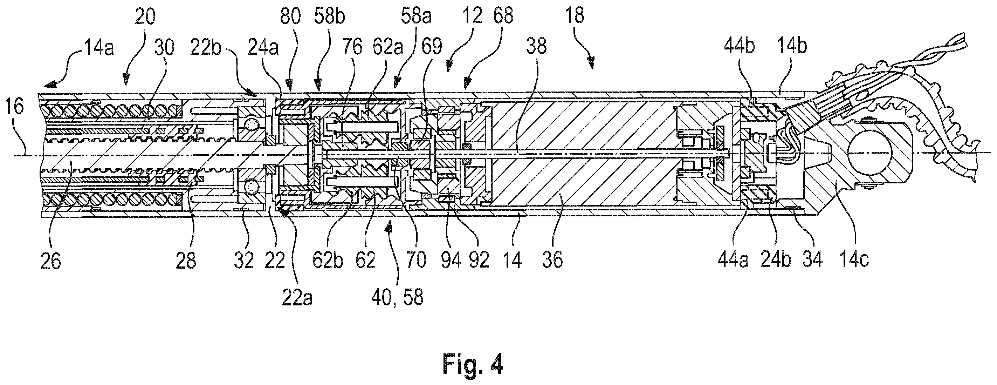

In der dargestellten Ausführungsform (siehe insbesondere die Figuren 3 und 4) ist die Motorgetriebeeinheit 18 über zwei Dämpfungselemente 24a, 24b, die aus einem Elastomer hergestellt sind, im Spindelantriebsbaugruppengehäuse 14 gelagert.

Die Spindeleinheit 20 umfasst neben einer Spindel 26 und einer mit dieser gekoppelten Spindelmutter 28 ein Führungsrohr 30.

In der dargestellten Ausführungsform ist das Führungsrohr 30 am Spindelantriebsbaugruppengehäuse 14 befestigt. Genauer gesagt, ist das Führungsrohr 30 mit dem Spindelantriebsbaugruppengehäuse 14 laserverschweißt. Die Laserschweißnaht 32 ist dabei lediglich schematisch eingezeichnet.

Der Anschlagsabschnitt 22 ist einstückig mit dem Spindelantriebsbaugruppengehäuse 14 produziert.

Dabei ist das Spindelantriebsbaugruppengehäuse 14 aus einem Kunststoff hergestellt.

Vorliegend ist der Anschlagsabschnitt 22 mittels Spritzgießen des Spindelantriebsbaugruppengehäuses 14 hergestellt.

Das Spindelantriebsbaugruppengehäuse 14 umfasst zusätzlich eine Gehäusekappe 14c. Diese schließt das Spindelantriebsbaugruppengehäuse 14 motorgetriebeeinheitsseitig ab.

Die Gehäusekappe 14c und das Spindelantriebsbaugruppengehäuse 14 sind laserverschweißt. Die Laserschweißnaht 34 ist dabei wieder nur schematisch eingezeichnet.

Die Montage der Spindelantriebsbaugruppe 12 läuft folgendermaßen ab.

Zunächst wird das Spindelantriebsbaugruppengehäuse 14 bereitgestellt.

Dann wird die Motorgetriebeeinheit 18 ausgehend von einer ersten axialen Seite des Spindelantriebsbaugruppengehäuses 14, auf der im gezeigten Beispiel das axiale Ende 14b angeordnet ist, in das Spindelantriebsbaugruppengehäuse 14 eingesetzt.

Dabei wird die Motorgetriebeeinheit 18 an die erste axiale Seite 22a des Anschlagsabschnitts 22 angelegt.

Die Spindeleinheit 20 wird von einer der ersten axialen Seite des Spindelantriebsbaugruppengehäuses 14 entgegengesetzten, zweiten axialen Seite 22b des Spindelantriebsbaugruppengehäuses 14 in dieses eingesetzt. In der dargestellten Ausführungsform ist auf dieser Seite das axiale Ende 14a angeordnet.

Die Spindeleinheit 20 wird an die zweite axiale Seite 22b des Anschlagsabschnitts 22 angelegt.

Ob zuerst die Motorgetriebeeinheit 18 oder zuerst die Spindeleinheit 20 am Spindelantriebsbaugruppengehäuse 14 montiert wird, ist für das Montageverfahren unerheblich. Es können auch die Motorgetriebeeinheit 18 und die Spindeleinheit 20 im Wesentlichen gleichzeitig montiert werden.

Wenn die Spindeleinheit 20 im Spindelantriebsbaugruppengehäuse 14 eingesetzt ist, wird diese darin befestigt. In der dargestellten Ausführungsform umfasst die Spindeleinheit 20 ein Führungsrohr 30, das mittels der Laserschweißnaht 32 am Spindelantriebsbaugruppengehäuse 14 befestigt wird.

Das Spindelantriebsbaugruppengehäuse 14 und das Führungsrohr 30 werden also laserverschweißt.

Nachfolgend wird das Spindelantriebsbaugruppengehäuse 14 am Ende 14b mittels einer Gehäusekappe 14c abgeschlossen. In diesem Zusammenhang wird das Spindelantriebsbaugruppengehäuse 14 mit der Gehäusekappe 14c laserverschweißt.

Die Motorgetriebeeinheit 18 umfasst einen Spindelantriebsmotor 36, der über eine Motorwelle 38 mit einem Getriebe 40 gekoppelt ist.

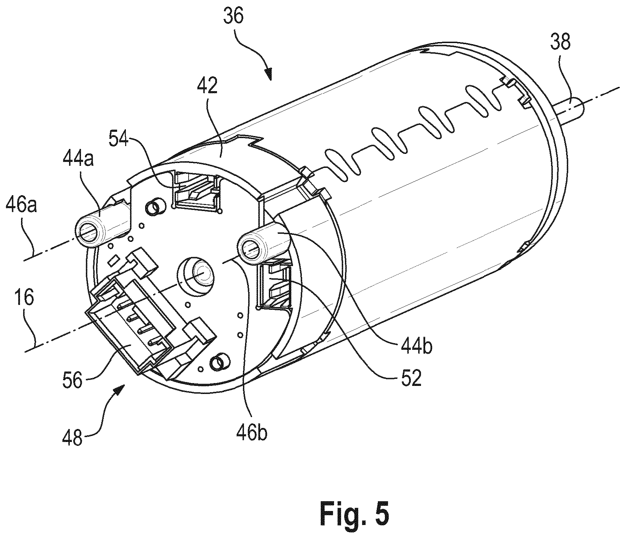

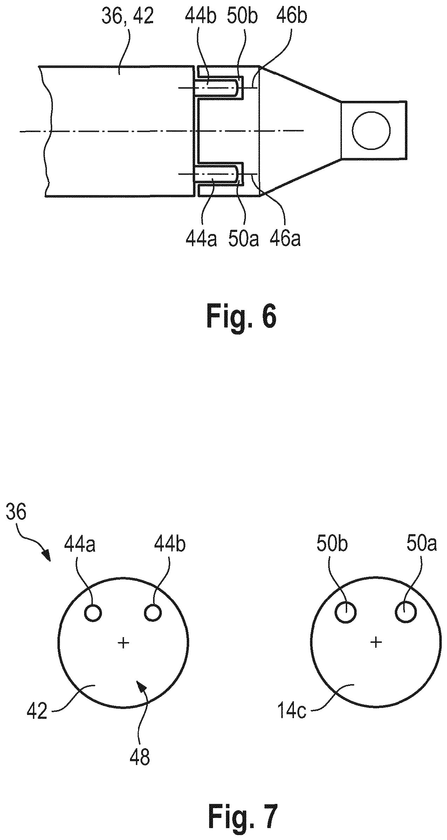

Die Figuren 5 - 7 zeigen den Spindelantriebsmotor 36 im Detail.

Nachdem die Motorgetriebeeinheit 18 im Spindelantriebsbaugruppengehäuse 14 angeordnet ist, ist auch der Spindelantriebsmotor 36 im Spindelantriebsbaugruppengehäuse 14 positioniert. Die Motorwelle 38 ist dabei im Wesentlichen koaxial zur Spindelantriebsachse 16.

Der Spindelantriebsmotor 36 und damit die Motorgetriebeeinheit 18 sind zudem über einen Formschluss bezüglich der Spindelantriebsachse 16 rotationsfest im Spindelantriebsbaugruppengehäuse 14 gelagert.

Genauer gesagt, ist der Spindelantriebsmotor 36 rotationsfest über einen Formschluss an der Gehäusekappe 14c gelagert, die ein Bestandteil des Spindelantriebsbaugruppengehäuses 14 ist.

Die rotationsfeste Lagerung erfolgt dabei über ein Motorgehäuse 42 des Spindelantriebsmotors 36.

An diesem sind in der dargestellten Ausführungsform zwei Antirotationsvorsprünge 44a, 44b vorgesehen, die sich im montierten Zustand des Spindelantriebsmotors 36 und damit auch der Motorgetriebeeinheit 18 im Wesentlichen entlang der Spindelantriebsachse 16 erstrecken.

Vorliegend sind die Antirotationsvorsprünge 44a, 44b kreiszylinderförmig, wobei im montierten Zustand des Spindelantriebsmotors 36 die zugeordneten Kreiszylindermittelachsen 46a, 46b im Wesentlichen parallel zur Spindelantriebsachse 16 verlaufen.

Die Antirotationsvorsprünge 44a, 44b sind an einer axialen Endseite 48 des Spindelantriebsmotors 36 vorgesehen, die der Motorwelle 38 abgewandt ist. Im montierten Zustand liegen die Antirotationsvorsprünge 44a, 44b also auf einer dem Getriebe 40 entgegengesetzten Seite des Spindelantriebsmotors 36.

Die Antirotationsvorsprünge 44a, 44b greifen im montierten Zustand in zugeordnete, am Spindelantriebsbaugruppengehäuse 14 vorgesehene Vertiefungen 50a, 50b ein. In der dargestellten Ausführungsform sind die Vertiefungen 50a, 50b an der Gehäusekappe 14c vorgesehen.

Genauer gesagt, sind in der dargestellten Ausführungsform die Vertiefungen 50a, 50b am Dämpfungselement 24b vorgesehen, das drehfest mit der Gehäusekappe 14c verbunden ist.

Die Antirotationsvorsprünge 44a, 44b können alternativ über elastische, auf den Antirotationsvorsprüngen 44a, 44b angeordnete Dämpfungskappen oder über elastische, in den Vertiefungen 50a, 50b angeordnete Dämpfungselemente in die Vertiefungen 50a, 50b eingreifen.

Wie insbesondere anhand Figur 5 zu erkennen ist, sind in der dargestellten Ausführungsform neben den Antirotationsvorsprüngen 44a, 44b zusätzlich ein erster elektrischer Leistungsanschluss 52, ein zweiter elektrischer Leistungsanschluss 54 sowie ein Sensoranschluss 56 an der axialen Endseite 48 des Spindelantriebsmotors 36 vorgesehen.

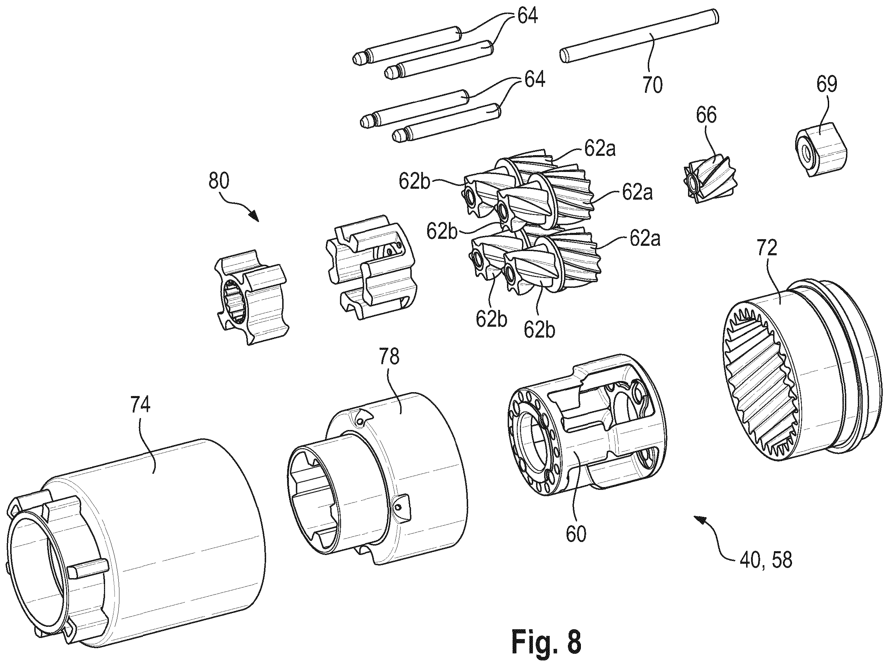

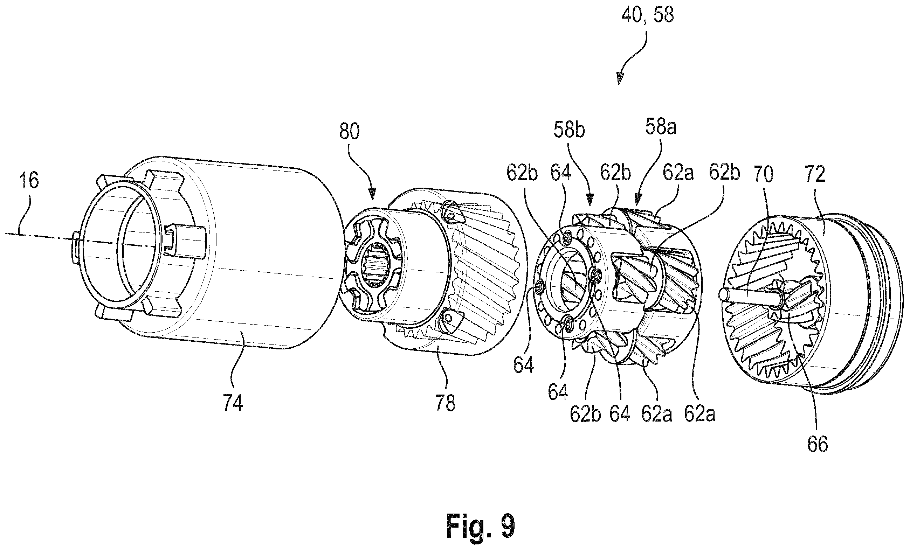

In den Figuren 8 und 9 ist das Getriebe 40 im Detail zu sehen.

Dabei ist zu erkennen, dass das Getriebe 40 ein zweistufiges Umlaufrädergetriebe 58 ist.

In diesem Zusammenhang umfasst es eine erste Umlaufrädergetriebestufe 58a, die auch als motorseitige oder antriebsseitige Umlaufrädergetriebestufe 58a bezeichnet wird, und eine zweite Umlaufrädergetriebestufe 58b, die auch als spindelseitige oder abtriebsseitige Umlaufrädergetriebestufe 58b bezeichnet wird.

Das Umlaufrädergetriebe 58 ist spiralverzahnt. Beide Umlaufrädergetriebestufen 58a, 58b weisen dabei gleichsinnige Spiralverzahnungen auf.

Zudem umfasst das zweistufige Umlaufrädergetriebe 58 lediglich einen einzigen, singulären Planetenträger 60. Dieser gehört also zu beiden Umlaufrädergetriebestufen 58a, 58b.

Darüber hinaus umfassen sowohl die motorseitige Umlaufrädergetriebestufe 58a als auch die spindelseitige Umlaufrädergetriebestufe 58b eine gleiche Anzahl an Planetenrädern 62a, 62b. Im dargestellten Ausführungsbeispiel umfasst jede der Umlaufrädergetriebestufen 58a, 58b vier Planetenräder 62a, 62b.

Dabei sind jeweils ein Planetenrad 62a der ersten Umlaufrädergetriebestufe 58a und ein Planetenrad 62b der zweiten Umlaufrädergetriebestufe 58b auf einer gemeinsamen Planetenradachse 64 gelagert.

Die auf einer gemeinsamen Planetenradachse 64 gelagerten Planetenräder 62a, 62b sind drehfest miteinander verbunden.

Das Umlaufrädergetriebe 58 funktioniert folgendermaßen.

Die Motorwelle 38 ist mit einem Sonnenrad 66 der motorseitigen Umlaufrädergetriebestufe 58a drehgekoppelt. Somit stellt das Sonnenrad 66 den Antrieb oder den Drehmomenteingang des Umlaufrädergetriebes 58 dar.

Nachdem diese Kopplung über eine Kupplung 68 erfolgt, ist streng genommen eine Getriebeeingangswelle 70 mit dem Sonnenrad 66 gekoppelt. Diese kann jedoch als Fortsetzung der Motorwelle 38 angesehen werden.

Die Kupplung 68 ist in der dargestellten Ausführungsform eine Oldhamkupplung zum Ausgleich von Achsversatz. In Figur 8 ist dabei lediglich ein getriebeseitiges Kupplungsteil 69 zu sehen, das mit der Getriebeeingangswelle 70 verbunden ist.

Das Sonnenrad 66 wirkt mit den Planetenrädern 62a der motorseitigen Umlaufrädergetriebestufe 58a zusammen, die wiederum mit einem Hohlrad 72 der motorseitigen Umlaufrädergetriebestufe 58a gekoppelt sind.

Das Hohlrad 72 ist drehfest und axialfest in dem Spindelantriebsbaugruppengehäuse 14 und/oder in einem Umlaufrädergetriebegehäuse 74 gelagert. Das Hohlrad 72 steht also im Wesentlichen fest im Raum.

Die motorseitige Umlaufrädergetriebestufe 58a ist mit der spindelseitigen Umlaufrädergetriebestufe 58b sowohl über den singulären Planetenträger 60 als auch über die einstückigen Planetenräder 62a, 62b gekoppelt.

Dabei ist die spindelseitige Umlaufrädergetriebestufe 58b sonnenradfrei ausgeführt.

Die Planetenräder 62b der spindelseitigen Umlaufrädergetriebestufe 58b sind lediglich radial auf einem axialen Lagerfortsatz 76 der Sonnenradwelle der motorseitigen Umlaufrädergetriebestufe 58a gelagert. Die Sonnenradwelle entspricht dabei der Getriebeeingangswelle 70.

Die Planetenräder 62b der spindelseitigen Umlaufrädergetriebestufe 58b sind ferner mit einem Hohlrad 78 der spindelseitigen Umlaufrädergetriebestufe 58b gekoppelt.

Dieses Hohlrad 78 ist über eine Kupplung 80 mit der Spindel 26 drehgekoppelt. Dabei ist das Hohlrad 78 im Spindelantriebsbaugruppengehäuse 14 und/oder im Umlaufrädergetriebegehäuse 74 drehbar gelagert.

Das Hohlrad 78 stellt also den Abtrieb oder den Drehmomentausgang des Umlaufrädergetriebes 58 dar.

Das Umlaufrädergetriebe 58 kann folgendermaßen montiert werden.

Zunächst werden alle Planetenräder 62a, 62b der beiden Umlaufrädergetriebestufen 58a, 58b im singulären Planetenträger 60 montiert.

Anschließend wird der Planetenträger 60 in das Hohlrad 72 der antriebsseitigen Umlaufrädergetriebestufe 58a oder in das Hohlrad 78 der abtriebsseitigen Umlaufrädergetriebestufe 58b eingesetzt.

Danach wird das jeweils andere Hohlrad, also das Hohlrad 78 oder das Hohlrad 72, auf diesen Verbund aufgesetzt.

Sodann wird das Umlaufrädergetriebegehäuse 74 bereitgestellt und mit dem Hohlrad 72 verbunden.

In der dargestellten Ausführungsform wird das Umlaufrädergetriebegehäuse 74 mit dem Hohlrad 72 in einem Überlappstoß laserverschweißt. Dafür ist das Umlaufrädergetriebegehäuse 74 laserlichtdurchlässig.

Damit die Spindelantriebsbaugruppe 12 im Betrieb Geräusche emittiert, die von einem Kraftfahrzeugnutzer als angenehm empfunden werden, ist der Verhältnis der Zähnezahl jedes der Planetenräder 62a der ersten Umlaufrädergetriebestufe 58a und der Zähnezahl jedes der Planetenräder 62b der zweiten Umlaufrädergetriebestufe 58b zu 2:1 gewählt.

In der dargestellten Ausführungsform umfasst jedes Planetenrad 62a der ersten Umlaufrädergetriebestufe 58a zwölf Zähne und jedes Planetenrad 62b der zweiten Umlaufrädergetriebestufe 58b sechs Zähne.

Das Verhältnis von 2:1 entspricht dem Intervall einer Oktave, wenn es auf ein Verhältnis von Schallfrequenzen bezogen ist.

Nachdem die von der ersten Umlaufrädergetriebestufe 58a emittierte Schallfrequenz maßgeblich durch die Zähnezahl der Planetenräder 62a der ersten Umlaufrädergetriebestufe 58a bestimmt wird und die von der zweiten Umlaufrädergetriebestufe 58b emittierte Schallfrequenz durch die Zähnezahl der Planetenräder 62b der zweiten Umlaufrädergetriebestufe 58b, emittiert die Spindelantriebsbaugruppe 12 im Betrieb also Schallfrequenzen, die eine Oktave bilden. Dies wird von Fahrzeugnutzern als besonders angenehm empfunden.

Zudem assoziiert ein Fahrzeugnutzer mit solchen angenehmen Geräuschen ein hohes Qualitätsniveau der Spindelantriebsbaugruppe 12.

Alternativ kann das Verhältnis der Zähnezahlen jedes der Planetenräder 62a der ersten Umlaufrädergetriebestufe und der Zähnezahl jedes der Planetenräder 62b der zweiten Umlaufrädergetriebestufe auch zu 3:2, 4:3, 5:4 oder 6:5 gewählt werden.

Die emittierten Schallfrequenzen bilden dann eine Quinte, eine Quarte, eine große Terz bzw. eine kleine Terz. Auch diese Intervalle werden von Menschen als angenehm empfunden.

Allgemein gesprochen, wird das Verhältnis der Zähnezahl eines jeden Planetenrades 62a der ersten Umlaufrädergetriebestufe 58a und der Zähnezahl eines jeden Planetenrades 62b der zweiten Umlaufrädergetriebestufe 58b derart gewählt, dass im Betrieb eine erste Schallfrequenz, die von der ersten Umlaufrädergetriebestufe 58a emittiert wird, um ein ganzzahliges Vielfaches eines Halbtons gegenüber einer zweiten Schallfrequenz, die von der zweiten Umlaufrädergetriebestufe 58b emittiert wird, abweicht.

Die bevorzugte Ausführungsform der Oktave umfasst dabei zwölf Halbtonschritte, die der Quinte sieben, die der Quarte fünf, die der großen Terz vier und die der kleinen Terz drei.

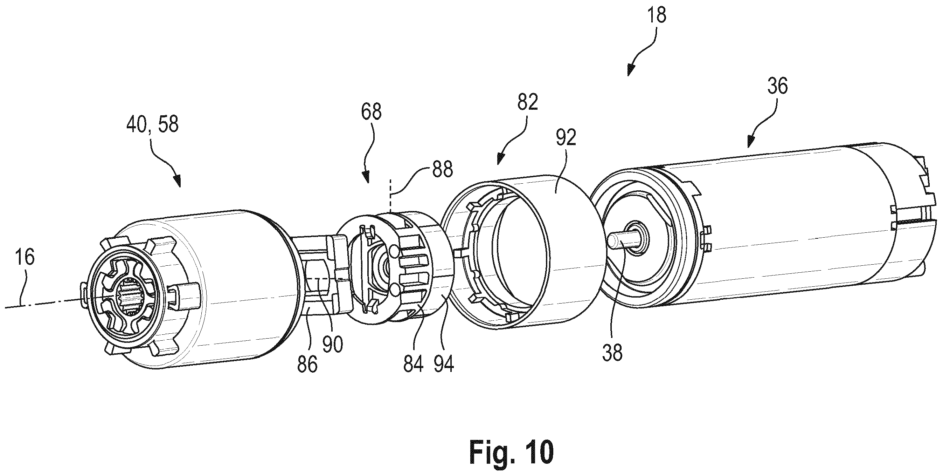

Die Kopplung des Spindelantriebsmotors 36 mit dem Getriebe 40, genauer gesagt mit dem zweistufigen Umlaufrädergetriebe 58, ist in Figur 10 im Detail dargestellt. Dabei sind dem Spindelantriebsmotor 36 und dem Getriebe 40 die einen Achsversatz ausgleichende Kupplung 68 und eine Hysteresebremse 82 antriebsmäßig zwischengeschaltet.

Wie bereits erwähnt, ist die Kupplung 68 eine Oldhamkupplung und umfasst ein antriebsmotorseitiges Kupplungsteil 84 sowie das getriebeseitige Kupplungsteil 69 (siehe Figur 8).

Die beiden Kupplungsteile 69, 84 sind über ein Kupplungszwischenteil 86 derart miteinander verbunden, dass die Motorwelle 38 und die Getriebeeingangswelle 70 drehfest miteinander verbunden sind.

Gleichzeitig ist das Kupplungszwischenteil 86 im montierten Zustand entlang einer Richtung 88 gegenüber dem antriebsmotorseitigen Kupplungsteil 84 verschiebbar.

Das getriebeseitige Kupplungsteil 69 ist gegenüber dem Kupplungszwischenteil 86 entlang einer Richtung 90 verschiebbar.

Die Richtung 88 und die Richtung 90 stehen dabei im Wesentlichen rechtwinklig aufeinander. Damit kann ein Achsversatz zwischen der Motorwelle 38 und der Getriebeeingangswelle 70 gemäß des Funktionsprinzips der Oldhamkupplung ausgeglichen werden.

Die Hysteresebremse 82 umfasst ein feststehendes Hysteresebremsenbauteil 92, das am Spindelantriebsbaugruppengehäuse 14 und/oder am Umlaufrädergetriebegehäuse 74 befestigt ist.

Zudem verfügt die Hysteresebremse 82 über ein mit der Motorwelle 38 drehgekoppeltes, drehbares Hysteresebremsenbauteil 94.

Dieses ist am antriebsmotorseitigen Kupplungsteil 84 befestigt oder in dieses integriert. Insbesondere ist das drehbare Hysteresebremsenbauteil 94 in das antriebsmotorseitige Kupplungsteil 84 eingespritzt.

Betrachtet man die Spindelantriebsbaugruppe 12 senkrecht zur Spindelantriebsachse 16, ist die Kupplung 68 in axialer Richtung im Wesentlichen vollständig innerhalb der Hysteresebremse 82, insbesondere innerhalb des feststehenden Hysteresebremsenbauteils 92 angeordnet. Der Aufbau der Kupplung 68 und der Hysteresebremse 82 ist also besonders kompakt.

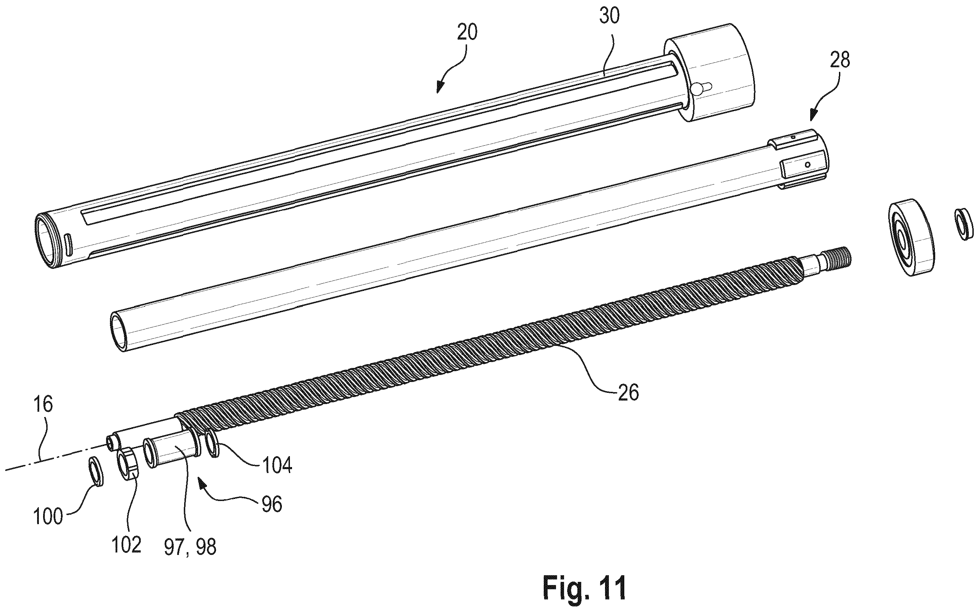

Die Figuren 11 - 14 zeigen die Spindeleinheit 20 im Detail.

Dabei ist an einem axialen Ende der Spindel 26 eine Anschlagsbaugruppe 96 angeordnet, die dazu ausgebildet ist, eine Beweglichkeit der Spindelmutter 28 entlang der Spindelantriebsachse 16 zu begrenzen. Konkret wird die Spindelmutter 28 so daran gehindert, sich über das Ende der Spindel 26 hinaus zu bewegen.

Die Anschlagsbaugruppe 96 umfasst ein plastisch verformbares Energieabsorptionsbauteil 97, das in der dargestellten Ausführungsform als Energieabsorptionshülse 98 ausgeführt ist, die im Wesentlichen koaxial die Spindel 26 umgibt.

Die Energieabsorptionshülse 98 ist also an der Spindel 26 gelagert.

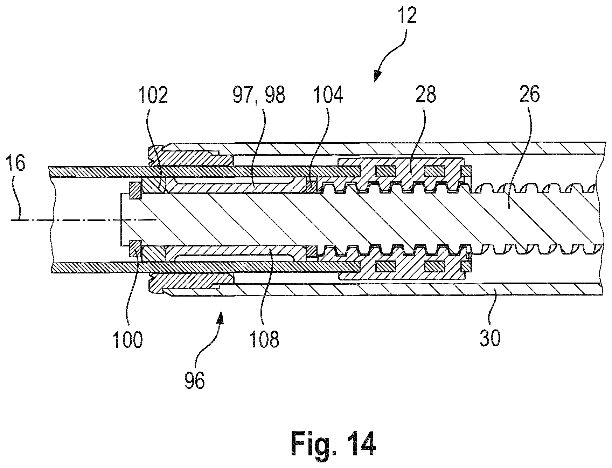

Die Energieabsorptionshülse 98 ist entlang der Spindelantriebsachse 16 zwischen einer spindelendseitigen Lagerscheibe 100 und der Spindelmutter 28 angeordnet (siehe insbesondere Figur 14).

Darüber hinaus ist zwischen der Energieabsorptionshülse 98 und der Lagerscheibe 100 ein Lagerelement 102 zur Lagerung der Spindel 26 am Spindelantriebsbaugruppengehäuse 14 vorgesehen.

Zwischen der Energieabsorptionshülse 98 und der Spindelmutter 28 ist darüber hinaus eine axial auf der Spindel 26 verschiebbare Anlaufscheibe 104 angeordnet.

Sowohl die Lagerscheibe 100 als auch die Anlaufscheibe 104 sind in der dargestellten Ausführungsform aus einem Metallwerkstoff hergestellt.

Die Energieabsorptionshülse 98 weist an ihren beiden axialen Enden jeweils einen als Krafteinleitungskragen ausgebildeten Kragen 106a, 106b auf.

Zwischen den Krägen 106a, 106b liegt ein in Richtung der Spindelantriebsachse 16 strauchbarer Verformungsabschnitt 108.

In der dargestellten Ausführungsform weist der Verformungsabschnitt lediglich einen einzigen Verformungsbereich auf. In alternativen Ausführungsformen kann er jedoch mehrere, insbesondere zwei Verformungsbereiche umfassen, wobei beide Verformungsbereiche in Richtung der Spindelantriebsachse 16 stauchbar sind.

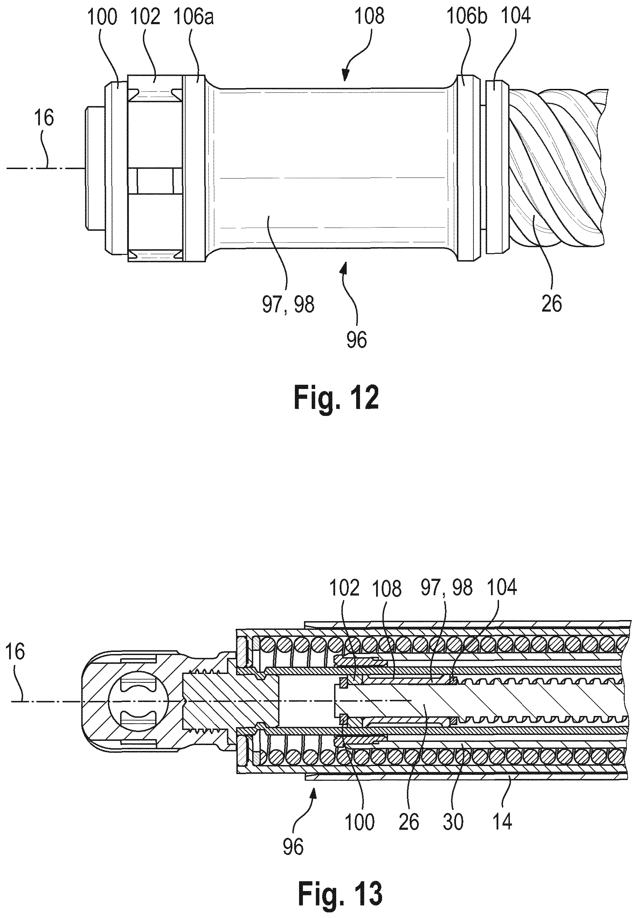

In einem Regulärbetrieb der Spindelantriebsbaugruppe 12 ist die Energieabsorptionshülse 98 im wesentlichen plastisch unverformt (siehe insbesondere die Figuren 12 bis 14). Dabei treten im Regulärbetrieb vorzugsweise Belastungen der Energieabsorptionshülse 98 auf, die ausschließlich Kräfte von weniger als 750 N umfassen.

Eine Belastung der Energieabsorptionshülse 98 mit einer Kraft von im Wesentlichen über 3000 N stellt für die dargestellte Ausführungsform ein Überlastereignis dar. Dadurch wird die Energieabsorptionshülse 98 plastisch verformt.

Ein solches Überlastereignis tritt auf, wenn die Spindelmutter 28 mit zu hoher Geschwindigkeit und/oder einer zu großen Kraft auf die Anschlagsbaugruppe 96, genauer gesagt die Energieabsorptionshülse 98 aufläuft.

Das kann beispielsweise bei einem Defekt der Hysteresebremse 82 passieren.

Auch kann ein Überlastereignis bei der Montage der Fahrzeugklappe 10 auftreten, wenn zwar die Spindelantriebsbaugruppe 12 schon mit der Fahrzeugklappe 10 verbunden ist, jedoch noch weitere Komponenten der Fahrzeugklappe 10 fehlen. Die Fahrzeugklappe 10 ist dann deutlich leichter als im Betrieb eines zugehörigen Fahrzeugs, für den die Spindelantriebsbaugruppe 12 ausgelegt ist. In diesem Zusammenhang kann die Spindelantriebsbaugruppe 12 mittels einer nicht näher bezeichneten Feder in eine Öffnungsstellung überführt werden. Aufgrund des verhältnismäßig geringen Gewichts der Fahrzeugklappe läuft die Spindelmutter 28 dann zu schnell an der Anschlagsbaugruppe 96 an.

Bei allen Überlastereignissen nimmt die Energieabsorptionshülse 98 die aus der überhöhten Geschwindigkeit und/oder der überhöhten Kraft resultierende Energie auf und schützt so die übrigen Komponenten der Spindelantriebsbaugruppe 12 vor Schäden.

In Figur 14 ist die Spindelmutter 28 an der Energieabsorptionshülse 98 anliegend dargestellt. Allerdings ist diese aus Gründen der besseren Übersichtlichkeit in ihrem plastisch unverformten Zustand gezeigt.

Bei einem nachfolgenden Betrieb der Spindelantriebsbaugruppe 12, in dem weiterhin das Öffnen und Schließen der Fahrzeugklappe 10 problemlos möglich ist, spricht man auch von einem Überlastfolgebetrieb. In diesem Betriebszustand ist die Energieabsorptionshülse 98 plastisch verformt (nicht dargestellt).

Für den Fall, dass die Energieabsorptionshülse 98 mehrere Verformungsbereiche umfasst, ist im Überlastfolgebetrieb nur einer der Verformungsbereiche plastisch verformt.

Tritt nachfolgend ein zweites Überlastereignis auf und umfasst die Energieabsorptionshülse 98 einen zweiten Verformungsbereich, so verformt sich dieser aufgrund des zweiten Überlastereignisses plastisch. Nachfolgend tritt die Spindelantriebsbaugruppe 12 in einen sekundären Überlastfolgebetrieb ein, in dem weiterhin das Öffnen und Schließen der Fahrzeugklappe 10 mittels der Spindelantriebsbaugruppe 12 gewährleistet ist.

## Patentansprüche

1. Spindelantriebsbaugruppe (12) zum Öffnen und/oder Schließen einer Fahrzeugklappe (10), mit einem sich entlang einer Spindelantriebsachse (16) erstreckenden Spindelantriebsbaugruppengehäuse (14), das zwischen seinen axialen Enden (14a, 14b) einen axial beidseitig wirkenden Anschlagsabschnitt (22) umfasst,
wobei auf einer ersten axialen Seite (22a) des Anschlagsabschnitts (22) eine Motorgetriebeeinheit (18) angeordnet ist und auf einer zweiten, der ersten axialen Seite (22a) entgegengesetzten axialen Seite (22b) des Anschlagsabschnitts (22) eine Spindeleinheit (20) angeordnet ist,
wobei die Motorgetriebeeinheit (18) an der ersten axialen Seite (22a) des Anschlagsabschnitts (22) angelegt ist und die Spindeleinheit (20) an der zweiten axialen Seite (22b) des Anschlagsabschnitts (22) angelegt ist,
wobei das Spindelantriebsbauruppengehäuse (14) rohrförmig mit einem im Wesentlichen kreisrunden Querschnitt ist, wobei derjenige Teil des Spindelantriebsbaugruppengehäuses (14), in dem die Motorgetriebeeinheit (18) und die Spindeleinheit (20) sitzen, einstückig hergestellt ist,
wobei das Spindelantriebsbaugruppengehäuse (14) eine Gehäusekappe (14c) umfasst, die motorgetriebeeingangsseitig das Spindelantriebsbaugruppengehäuse (14) abschließt,
wobei die Motorgetriebeeinheit (18) einen Spindelantriebsmotor (36), der über eine Motorwelle (38) mit einem Getriebe (40) gekoppelt ist, aufweist,
**dadurch gekennzeichnet, dass** die Gehäusekappe (14c) innerhalb des Spindelantriebsbaugruppengehäuses (14) laserverschweisst ist, wobei der Spindelantriebsmotor (36) und die Motorgetriebeinheit (18) über einen Formschluss bezüglich der Spindelantriebsachse (16) rotationsfest im Spindelantriebsbaugruppengehäuse (14) gelagert ist, wobei der Spindelantriebsmotor (36) rotationsfest über einen Formschluss an der Gehäusekappe (14c) gelagert ist.

2. Spindelantriebsbaugruppe (12) nach Anspruch 1, **dadurch gekennzeichnet, dass** die Motorgetriebeeinheit (18) über ein Dämpfungselement (24a, 24b) oder über mehrere Dämpfungselemente (24a, 24b) im Spindelantriebsbaugruppengehäuse (14) gelagert ist.

3. Spindelantriebsbaugruppe (12) nach einem der vorhergehenden Ansprüche, **dadurch gekennzeichnet, dass** die Spindeleinheit (20) ein im Spindelantriebsbaugruppengehäuse (14) befestigtes Führungsrohr (30) umfasst, insbesondere wobei das Führungsrohr (30) und das Spindelantriebsbaugruppengehäuse (14) laserverschweißt sind.

4. Spindelantriebsbaugruppe (12) nach einem der vorhergehenden Ansprüche, **dadurch gekennzeichnet, dass** der Anschlagsabschnitt (22) einstückig mit dem Spindelantriebsbaugruppengehäuse (14) hergestellt ist.

5. Spindelantriebsbaugruppe (12) nach einem der vorhergehenden Ansprüche, **dadurch gekennzeichnet, dass** das Spindelantriebsbaugruppengehäuse (14) aus Kunststoff hergestellt ist.

6. Fahrzeugklappe (10), insbesondere Fahrzeugheckklappe oder Fahrzeugkofferraumdeckel, mit einer Spindelantriebsbaugruppe (12) nach einem der vorhergehenden Ansprüche.

7. Verfahren zur Montage einer Spindelantriebsbaugruppe (12) zum Öffnen und/oder Schließen einer Fahrzeugklappe (10), mit den folgenden Schritten:
a) Bereitstellen eines einstückigen sich entlang einer Spindelantriebsachse (16) erstreckenden Spindelantriebsbaugruppengehäuses (14),
b) Einsetzen einer Motorgetriebeeinheit (18) in das Spindelantriebsbaugruppengehäuse (14) ausgehend von einer ersten axialen Seite des Spindelantriebsbaugruppengehäuses (14) und
c) Einsetzen einer Spindeleinheit (20) in das Spindelantriebsbaugruppengehäuse (14) ausgehend von einer zweiten, der ersten entgegengesetzten axialen Seite des Spindelantriebsbaugruppengehäuses (14), wobei am Spindelantriebsbaugruppengehäuse (14) ein axial beidseitig wirkender Anschlagsabschnitt (22) vorgesehen ist und die Motorgetriebeeinheit (18) an eine erste axiale Seite (22a) des Anschlagsabschnitts (22) angelegt wird und die Spindeleinheit (20) an eine zweite, der ersten axialen Seite (22a) entgegengesetzte axiale Seite (22b) des Anschlagsabschnitts (22) angelegt wird, wobei das Spindelantriebsbaugruppengehäuse (14) eine Gehäusekappe (14c) umfasst, die motorgetriebeeingangsseitig das Spindelantriebsbaugruppengehäuse (14) abschließt und innerhalb des Spindelantriebsbaugruppengehäuses (14) laserverschweißt wird, wobei die Motorgetriebeeinheit (18) einen Spindelantriebsmotor (36), der über eine Motorwelle (38) mit einem Getriebe (40) gekoppelt ist, aufweist,
wobei der Spindelantriebsmotor (36) und die Motorgetriebeinheit (18) über einen Formschluss bezüglich der Spindelantriebsachse (16) rotationsfest im Spindelantriebsbaugruppengehäuse (14) gelagert ist, wobei der Spindelantriebsmotor (36) rotationsfest über einen Formschluss an der Gehäusekappe (14c) gelagert ist.

8. Verfahren nach Anspruch 7, **dadurch gekennzeichnet, dass** die Spindeleinheit (20) am Spindelantriebsbaugruppengehäuse (14) befestigt wird, insbesondere wobei die Spindeleinheit (20) mit dem Spindelantriebsbaugruppengehäuse (14) laserverschweißt wird.

9. Verfahren nach Anspruch 8, **dadurch gekennzeichnet, dass** ein von der Spindeleinheit (20) umfasstes Führungsrohr (30) am Spindelantriebsbaugruppengehäuse (14) befestigt wird, insbesondere wobei das Führungsrohr (30) mit dem Spindelantriebsbaugruppengehäuse (14) laserverschweißt wird.

## Claims

1. A spindle drive assembly (12) for opening and/or closing a vehicle flap (10), comprising a spindle drive assembly housing (14) which extends along a spindle drive axis (16) and comprises, between its axial ends (14a, 14b), a stop section (22) acting axially on both sides,
wherein a motor gear unit (18) is arranged on a first axial side (22a) of the stop section (22) and a spindle unit (20) is arranged on a second axial side (22b) of the stop section (22) opposite the first axial side (22a),
wherein the motor gear unit (18) is placed against the first axial side (22a) of the stop section (22) and the spindle unit (20) is placed against the second axial side (22b) of the stop section (22),
wherein the spindle drive assembly housing (14) is tubular with a substantially circular cross-section, wherein that part of the spindle drive assembly housing (14) in which the motor gear unit (18) and the spindle unit (20) are seated is manufactured in one piece,
wherein the spindle drive assembly housing (14) comprises a housing cap (14c), which closes the spindle drive assembly housing (14) on the motor gear input side,
wherein the motor gear unit (18) includes a spindle drive motor (36), which is coupled to a gearing (40) via a motor shaft (38),
**characterized in that** the housing cap (14c) is laser welded inside the spindle drive assembly housing (14), wherein the spindle drive motor (36) and the motor gear unit (18) are supported in the spindle drive assembly housing (14) so as to be rotationally fixed with respect to the spindle drive axis (16) by means of an interlocking fit, wherein the spindle drive motor (36) is supported at the housing cap (14c) so as to be rotationally fixed by means of an interlocking fit.

2. The spindle drive assembly (12) according to claim 1, **characterized in that** the motor gear unit (18) is supported in the spindle drive assembly housing (14) by means of a damping element (24a, 24b) or by means of a plurality of damping elements (24a, 24b).

3. The spindle drive assembly (12) according to either of the preceding claims, **characterized in that** the spindle unit (20) comprises a guide tube (30) fastened in the spindle drive assembly housing (14), in particular wherein the guide tube (30) and the spindle drive assembly housing (14) are laser welded.

4. The spindle drive assembly (12) according to any of the preceding claims, **characterized in that** the stop section (22) is manufactured in one piece with the spindle drive assembly housing (14).

5. The spindle drive assembly (12) according to any of the preceding claims, **characterized in that** the spindle drive assembly housing (14) is made from a plastic material.

6. A vehicle flap (10), in particular a vehicle hatch or tailgate or a vehicle trunk lid, comprising a spindle drive assembly (12) according to any of the preceding claims.

7. A method of assembling a spindle drive assembly (12) for opening and/or closing a vehicle flap (10), comprising the following steps:
(a) providing a one-piece spindle drive assembly housing (14) extending along a spindle drive axis (16);
(b) inserting a motor gear unit (18) into the spindle drive assembly housing (14) starting from a first axial side of the spindle drive assembly housing (14); and
(c) inserting a spindle unit (20) into the spindle drive assembly housing (14) starting from a second axial side of the spindle drive assembly housing (14) opposite the first side, wherein a stop section (22) acting axially on both sides is provided at the spindle drive assembly housing (14) and the motor gear unit (18) is placed against a first axial side (22a) of the stop section (22) and the spindle unit (20) is placed against a second axial side (22b) of the stop section (22) opposite the first axial side (22a), wherein the spindle drive assembly housing (14) comprises a housing cap (14c), which closes the spindle drive assembly housing (14) on the motor gear input side and is laser welded inside the spindle drive assembly housing (14), wherein the motor gear unit (18) includes a spindle drive motor (36), which is coupled to a gearing (40) via a motor shaft (38),
wherein the spindle drive motor (36) and the motor gear unit (18) are supported in the spindle drive assembly housing (14) so as to be rotationally fixed with respect to the spindle drive axis (16) by means of an interlocking fit, wherein the spindle drive motor (36) is supported at the housing cap (14c) so as to be rotationally fixed by means of an interlocking fit.

8. The method according to claim 7, **characterized in that** the spindle unit (20) is fastened to the spindle drive assembly housing (14), in particular wherein the spindle unit (20) is laser welded to the spindle drive assembly housing (14).

9. The method according to claim 8, **characterized in that** a guide tube (30) comprised by the spindle unit (20) is fastened to the spindle drive assembly housing (14), in particular wherein the guide tube (30) is laser welded to the spindle drive assembly housing (14).

## Revendications

1. Ensemble d'entraînement à vis (12) pour l'ouverture et/ou la fermeture d'un ouvrant de véhicule (10), comprenant un boîtier d'ensemble d'entraînement à vis (14) qui s'étend le long d'un axe d'entraînement à vis (16) et qui comprend entre ses extrémités axiales (14a, 14b) un tronçon de butée (22) agissant axialement des deux côtés,
une unité moteur-transmission (18) étant agencée d'un premier côté axial (22a) du tronçon de butée (22) et une unité de vis (20) étant agencée d'un deuxième côté axial (22b) du tronçon de butée (22), opposé au premier côté axial (22a),
l'unité moteur-transmission (18) étant en appui contre le premier côté axial (22a) du tronçon de butée (22), et l'unité de vis (20) étant en appui contre le deuxième côté axial (22b) du tronçon de butée (22),
le boîtier d'ensemble d'entraînement à vis (14) étant tubulaire avec une section transversale sensiblement circulaire, la partie du boîtier d'ensemble d'entraînement à vis (14) dans laquelle se trouvent l'unité moteur-transmission (18) et l'unité de vis (20) étant réalisée d'un seul tenant,
le boîtier d'ensemble d'entraînement à vis (14) comprenant un capot de boîtier (14c) qui ferme le boîtier d'ensemble d'entraînement à vis (14) du côté de l'entrée moteur-transmission,
l'unité moteur-transmission (18) présentant un moteur d'entraînement à vis (36) qui est couplé à une transmission (40) par un arbre de moteur (38),
**caractérisé en ce que** le capot de boîtier (14c) est soudé au laser à l'intérieur du boîtier d'ensemble d'entraînement à vis (14), le moteur d'entraînement à vis (36) et l'unité moteur-transmission (18) étant montés solidaires en rotation par rapport à l'axe d'entraînement à vis (16) dans le boîtier d'ensemble d'entraînement à vis (14) par coopération de formes, le moteur d'entraînement à vis (36) étant monté solidaire en rotation sur le capot de boîtier (14c) par coopération de formes.

2. Ensemble d'entraînement à vis (12) selon la revendication 1, **caractérisé en ce que** l'unité moteur-transmission (18) est montée dans le boîtier d'ensemble d'entraînement à vis (14) par l'intermédiaire d'un élément d'amortissement (24a, 24b) ou d'une pluralité d'éléments d'amortissement (24a, 24b).

3. Ensemble d'entraînement à vis (12) selon l'une des revendications précédentes, **caractérisé en ce que** l'unité de vis (20) comprend un tube de guidage (30) fixé dans le boîtier d'ensemble d'entraînement à vis (14), le tube de guidage (30) et le boîtier d'ensemble d'entraînement à vis (14) étant en particulier soudés au laser.

4. Ensemble d'entraînement à vis (12) selon l'une des revendications précédentes, **caractérisé en ce que** le tronçon de butée (22) est réalisé d'un seul tenant avec le boîtier d'ensemble d'entraînement à vis (14).

5. Ensemble d'entraînement à vis (12) selon l'une des revendications précédentes, **caractérisé en ce que** le boîtier d'ensemble d'entraînement à vis (14) est réalisé en matière plastique.

6. Ouvrant de véhicule (10), en particulier hayon arrière de véhicule ou couvercle de coffre de véhicule, comprenant un ensemble d'entraînement à vis (12) selon l'une des revendications précédentes.

7. Procédé de montage d'un ensemble d'entraînement à vis (12) pour l'ouverture et/ou la fermeture d'un ouvrant de véhicule (10), comprenant les étapes suivantes :
a) fourniture d'un boîtier d'ensemble d'entraînement à vis (14) réalisé d'un seul tenant qui s'étend le long d'un axe d'entraînement à vis (16),
b) insertion d'une unité moteur-transmission (18) dans le boîtier d'ensemble d'entraînement à vis (14) à partir d'un premier côté axial du boîtier d'ensemble d'entraînement à vis (14), et
c) insertion d'une unité de vis (20) dans le boîtier d'ensemble d'entraînement à vis (14) à partir d'un deuxième côté axial du boîtier d'ensemble d'entraînement à vis (14), opposé au premier côté, un tronçon de butée (22) agissant axialement des deux côtés étant prévu sur le boîtier d'ensemble d'entraînement à vis (14), et l'unité moteur-transmission (18) étant agencée en appui contre un premier côté axial (22a) du tronçon de butée (22), et l'unité de vis (20) étant agencée en appui contre un deuxième côté axial (22b) du tronçon de butée (22), opposé au premier côté axial (22a), le boîtier d'ensemble d'entraînement à vis (14) comprenant un capot de boîtier (14c) qui ferme le boîtier d'ensemble d'entraînement à vis (14) du côté de l'entrée moteur-transmission et étant soudé au laser à l'intérieur du boîtier d'ensemble d'entraînement à vis (14), l'unité moteur-transmission (18) présentant un moteur d'entraînement à vis (36) qui est couplé à une transmission (40) par un arbre de moteur (38),
le moteur d'entraînement à vis (36) et l'unité moteur-transmission (18) étant montés solidaires en rotation par rapport à l'axe d'entraînement à vis (16) dans le boîtier d'ensemble d'entraînement à vis (14) par coopération de formes, le moteur d'entraînement à vis (36) étant monté solidaire en rotation sur le capot de boîtier (14c) par coopération de formes.

8. Procédé selon la revendication 7, **caractérisé en ce que** l'unité de vis (20) est fixée au boîtier d'ensemble d'entraînement à vis (14), l'unité à vis (20) étant en particulier soudée au laser au boîtier d'ensemble d'entraînement à vis (14).

9. Procédé selon la revendication 8, **caractérisé en ce qu'**un tube de guidage (30) compris dans l'unité de vis (20) est fixé au boîtier d'ensemble d'entraînement à vis (14), le tube de guidage (30) étant en particulier soudé au laser au boîtier d'ensemble d'entraînement à vis (14).
